# EUROPÄISCHE PATENTSCHRIFT

(11) **EP 1 849 549 B1**
(45) Veröffentlichungstag und Bekanntmachung des Hinweises auf die Patenterteilung: **02.12.2009**
(21) Anmeldenummer: 07005227.9
(22) Anmeldetag: 14.03.2007
(51) Int. Cl.: B23K 9/00, B23K 9/16, B23K 26/14, B23K 26/20, B23K 37/02, B23K 37/047, B23P 15/00, B23Q 7/14, B62D 65/02, B23K 11/11

(54) **Verfahren und Vorrichtung zum Verbinden von Karosserieteilen unter Verwendung vom Widerstandschweissen und Schutzgasschweissen**
Method and device for joining car body panels using resistance welding and protective gas welding
Procédé et dispositif pour assembler des éléments de carrosserie utilisant le soudage par résistance et le soudage sous atmosphère de gaz protecteur

(30) Priorität: 29.04.2006 DE 102006020076
(43) Veröffentlichungstag der Anmeldung: 31.10.2007
(73) Patentinhaber: Bayerische Motoren Werke Aktiengesellschaft, 80809 München (DE)
(72) Erfinder: Schenk, Wolfgang, 93352 Rohr i. NB (DE)

(56) Entgegenhaltungen:
- DE-A1- 10 151 257
- DE-U1-202004 018 512
- US-A- 4 960 969
- US-A- 5 226 584
- US-B2- 6 339 874

## Beschreibung

Die Erfindung bezieht sich auf ein Verfahren nach dem Oberbegriff des Anspruchs 1 und eine Vorrichtung zur Durchführung des Verfahrens nach Anspruch 2.

In der Serien- oder Fließfertigung von Fahrzeugkarosserien ist es üblich, dass die Karosserien sukzessive durch einzelne Bearbeitungsstationen transportiert werden. Üblich ist hierbei das Heften der einzelnen Karosseriebauteile und dann ein anschließendes Ausschweißen.

Zum Schweißen wird in der Regel Widerstandsschweißen oder Laserschweißen eingesetzt. An einigen Bauteilen wird auch das Schutzgasschweißen verwendet. Die Roboter können verfahrbar oder stationär angeordnet werden. Eine derartige Anordnung beschreibt die DE 101 51 257 A1 oder US 5,226,584 A.

Während das Widerstandschweißen und auch die Laserschweißung mit Hilfe von Robotern in einer Fertigungsstraße üblich und auch aufgrund der hohen Zuverlässigkeit des Schweißverfahrens und der hieran beteiligten Vorrichtungen problemlos möglich ist, bereitet das Schutzgasschweißen in der Serienfertigung Taktzeitprobleme, da die Schweißbrenner störanfällig sind und deshalb in einer Schutzgasschweißstation öfters Ausfallzeiten durch Wartung und/oder Brennertausch einkalkuliert werden müssen. Deshalb werden Schutzgasschweißungen bisher nicht in der Fertigungslinie verwendet, sondern die Karossen werden hierzu ausgetaktet und in einzelnen Schutzgasschweißzonen bearbeitet. Hierbei müssen dann mehrere Schutzgasschweißzonen eingerichtet werden, um die Taktzeitprobleme zu bewältigen. Dies ist teuer und benötigt unverhältnismäßig viel Platz in der Werkhalle.

Aufgabe der vorliegenden Erfindung ist es, hier Abhilfe zu schaffen.

Diese Aufgabe wird erfindungsgemäß durch die Merkmale des Anspruchs 1 und des Anspruchs 2 gelöst.

Die Lösung basiert auf dem Grundgedanken, dass in der Bearbeitungsstation für die Schutzgasschweißung die entsprechenden Schweißroboter so angeordnet werden, dass bei Ausfall eines Roboters der andere Roboter dessen Tätigkeit mit übernehmen kann. Dann kann in der Zeit, in dem der andere Roboter die Arbeit übernimmt, der ausgefallene Roboter gewartet werden, so dass er ohne Unterbrechung der Taktzeit in der Schutzgasschweißstation wieder einsatzfähig gemacht werden kann.

Eine derartige Anordnung hat den Vorteil, dass eine Schutzgasschweißstation mit Schweißrobotern in der Fließfertigung zum Verbinden von Karosserien für Kraftfahrzeuge eingerichtet werden kann. Damit wird ein Austakten der zu verschweißenden Karosserien nicht mehr erforderlich. Auch ist der Platzbedarf der Schutzgasschweißstation nur unwesentlich durch die erfindungsgemäßen Maßnahmen vergrößert. Damit wird die Schutzgasschweißstation preiswerter und auch ihr Platzbedarf sinkt.

Die Unteransprüche 3 bis 6 beschreiben vorteilhafte Ausführungen der Erfindung.

So ist es sinnvoll, auf jeder Seite der Transportlinie die gleiche Anzahl von Robotern vorzusehen, wobei dann auf jeder Seite vorzugsweise mindestens zwei Roboter angeordnet werden, so dass bei Ausfall eines Roboters auf einer Seite der andere Roboter der gleichen Seite dessen Arbeit mit übernehmen kann.

Die Weiterbildung nach Anspruch 4 erhöht die Sicherheit des Wartungspersonals.

Um den Platzbedarf in der Fläche der Schutzgasschweißstation nicht unnötig zu vergrößern, ist die Weiterbildung nach Anspruch 5 zweckmäßig. Diese Ausgestaltung bietet sich immer dann an, wenn die Werkhalle hoch genug ist, was üblicherweise der Fall ist.

Die Weiterbildung nach Anspruch 6 vereinfacht die Schweißdrahtzufuhr.

Im Folgenden wird die Erfindung anhand eines bevorzugten Ausführungsbeispiels näher beschrieben. Es stellen dar:
- Figur 1: eine Draufsicht auf eine Rohbauschweißanlage für Kraftfahrzeuge;
- Figur 2: eine Draufsicht auf die Schutzgasschweißstation;
- Figur 3: eine Draufsicht auf die zweite Ebene der Schutzgasschweißstation.

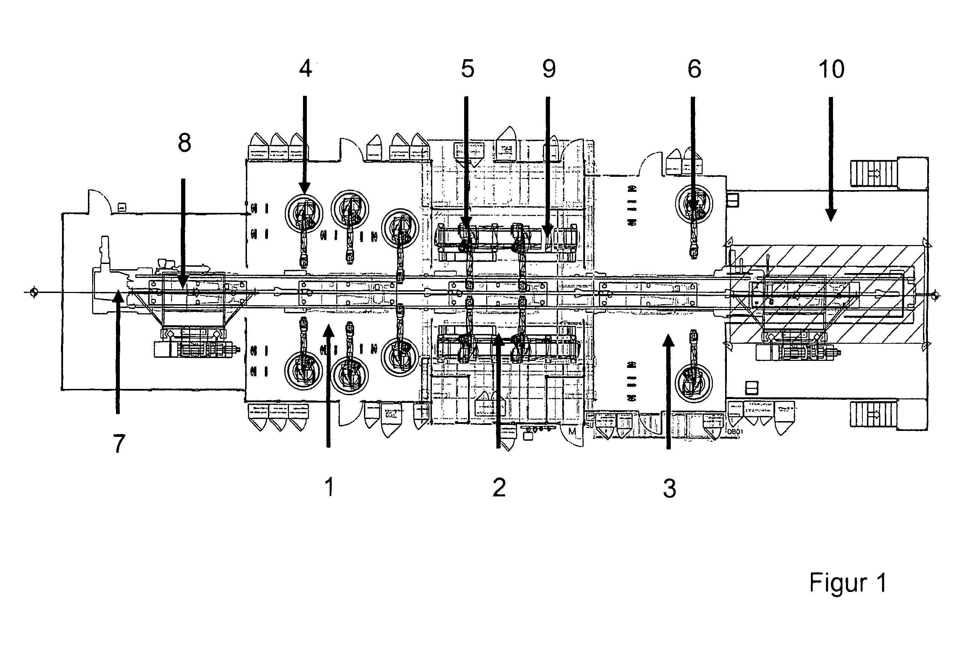

In Figur 1 sind schematisiert drei Bearbeitungsstationen 1 bis 3 in Draufsicht dargestellt.

Die Bearbeitungsstation 1 weist in diesem Beispiel sechs Schweißroboter 4 auf, die mit Widerstandspunktschweißzangen ausgerüstet sind.

Die Bearbeitungsstation 2 besteht aus insgesamt vier Schweißrobotern 5, die mit Schutzgasschweißbrennern ausgerüstet sind. Die darauf folgende Bearbeitungsstation 3 weist wiederum zwei Roboter 6 mit Widerstandspunktschweißzangen auf.

Über eine Transporteinrichtung 7 wird eine lose zusammengeheftete Fahrzeugkarosserie 8 (strichliniert gezeichnet) oder Teile hiervon durch die einzelnen Bearbeitungsstationen transportiert.

Als erstes läuft in diesem Beispiel die auszuschweißende Karosserie 8 in die Station 1 ein. Die hier vorgesehenen Schweißroboter 4 sind stationär angeordnet, wobei auf jeder Seite der Transporteinrichtung 7 jeweils drei Schweißroboter aufgestellt sind. In dieser an sich bekannten Schweißstation stoppt die auszuschweißende Karosserie 8 und die einzelnen Schweißroboter führen ihre Schweißaufgaben aus.

Nachdem diese Schweißaufgaben erledigt sind, wird die auszuschweißende Karosserie 8 von der Transporteinrichtung 7 in die Bearbeitungsstation 2 gefördert. Hier sind jeweils zwei Schweißroboter 5 auf jeder Seite der Transporteinrichtung 7 vorgesehen. Diese Schweißroboter 5 sind gemäß der Erfindung verfahrbar auf Transportschienen 9 angeordnet. Die Transportschienen 9 verlaufen parallel gemäß der Erfindung zur Förderrichtung der Transporteinrichtung 7.

Sobald diese Schweißroboter 5 ihre Schweißaufgabe erledigt haben, wird die auszuschweißende Karosserie 8 in die Schweißstation 3 gefördert, in der rechts und links neben der Transporteinrichtung 7 jeweils ein Schweißroboter 6 mit Widerstandsschweißzange angeordnet ist, um noch restliche Schweißarbeiten auszuführen.

Nachdem diese Schweißaufgaben ausgeführt sind, gelangt die Karosserie in die Transportstation 10, die sie mit einem Lift zu den weiteren nicht dargestellten Bearbeitungsstationen transportiert.

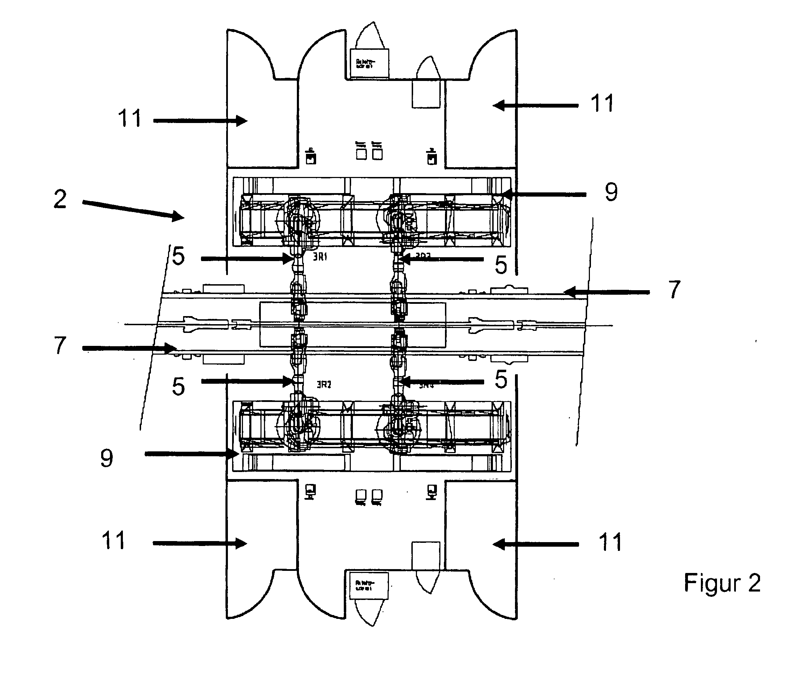

In Figur 2 ist die untere Ebene der Bearbeitungsstation 2 näher dargestellt. Hier sieht man, dass gemäß der Erfindung hinter den Verfahrschienen 9 Wartungsstationen 11 auf jeder Seite der Transporteinrichtung 7 vorgesehen sind. Die Verfahrschienen 9 sind derart verlängert, dass die Schweißroboter jeder Seite bis auf Höhe der Wartungsstationen 11 verfahren können. Der zwischen den Wartungsstationen verbleibende Verfahrweg reicht aus, dass die geplanten Schweißaufgaben erledigt werden können.

Die Wartungsstationen 11 sind in üblicher Weise aufgebaut und von dem Arbeitsbereich der Roboter durch Sicherheitseinrichtungen abgetrennt.

Fällt ein Schweißgasbrenner oder die Schweißdrahtzufuhr eines Schweißroboters in der Bearbeitungsstation 2 aus, so verfährt der entsprechende Schweißroboter gemäß der Erfindung an das zugehörige Ende der Verfahrschienen 9 und verschwenkt seine freie vordere Achse mit dem Schweißgasbrenner in die Wartungsstation 11. Dort kann dann das Wartungspersonal die Wartung vornehmen bzw. den Schweißbrenner austauschen. Entsprechendes geschieht zur Reparatur der Schweißdrahtzufuhr.

In der Zwischenzeit gemäß der Erfindung übernimmt der zweite Schweißroboter die Schweißaufgaben des ausgefallenen, da die Wartungsstation 11 gemäß der Erfindung außerhalb des Arbeitsbereiches der Schweißroboter an der Karosserie 8 liegt.

Sobald der ausgefallene Schweißroboter wieder in Stand gesetzt ist, kann er seine Arbeit wieder aufnehmen.

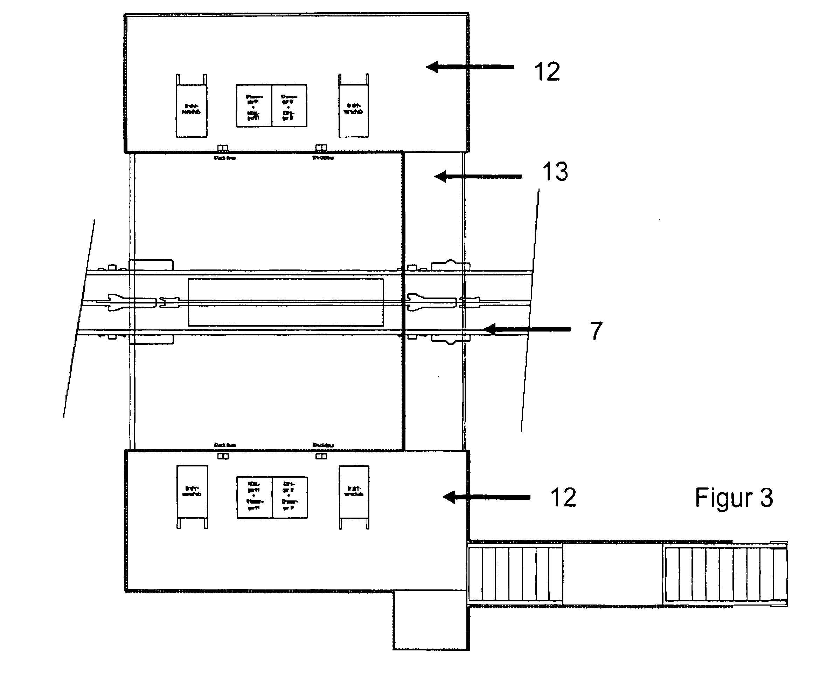

Figur 3 zeigt eine Draufsicht auf die zweite Ebene 12 der Bearbeitungsstation 2. Es sei noch darauf hingewiesen, dass sich die Bearbeitungsstationen 1 und 3 und die untere Ebene der Bearbeitungsstation 2 auf gleichem Niveau befinden.

Diese zweite Ebene befindet sich jeweils über den Wartungsstationen 11 und behindert selbstverständlich nicht die Wartungsstationen bzw. das Eindrehen der Schweißroboter in die Wartungsstationen. Auf diesen zweiten Ebenen 12, die über eine Brücke 13 miteinander verbunden sind, sind für jeden Roboter die Schweißdrahtrollen, die Kühlaggregate, das Leistungsteil mit der Steuerung sowie der Zwischendrahtvorschub angeordnet. Diese Aggregate beschränken somit nicht den Raum der Wartungsstationen in der ersten Ebene.

Damit ist eine Entflechtung des Aufbaus gegeben, so dass auf geringster Fläche ein optimaler Raum für die Schweißroboter und die Instandhaltung geschaffen wurde.

Weiterhin hat diese Anordnung den Vorteil, dass das Schlauchpaket von der zweiten Ebene 12 von oben und hinten an die Schweißroboter in die erste Ebene herangeführt werden kann. Dadurch ist eine Beschädigung des Schlauchpaketes und auch eine Behinderung der Drahtzufuhr und damit seine Störanfälligkeit minimiert. Weiterhin wird dadurch eine Beschädigung des Schlauchgutes durch herabfallendes Schweißgut verhindert.

## Patentansprüche

1. Verfahren zum Verbinden von Karosserieteilen (8) für Kraftfahrzeuge in der Fließfertigung unter Verwendung von Schweißrobotern (4,5) und unterschiedlicher Schweißverfahren, wobei sowohl das Widerstandsschweißen (4) als auch das Schutzgasschweißen (5) zur Anwendung gelangen, bei dem die zu verbindenden Karosserieteile (8) oder die Fahrzeugkarosserie in einer Fertigungslinie über eine Transporteinrichtung durch die einzelnen Bearbeitungsstationen (1 bis 3) transportiert werden, **dadurch gekennzeichnet, dass** mindestens zwei Schwoßroboter (5) für die Schutzgasschweißung vorgesehen sind, die parallel zur Transporteinrichtung (7) verfahren und deren Verfahrweg größer ist als der zur Bearbeitung notwendige Verfahrweg und bei dem sich an den Arbeitsbereich ein Wartungsbereich (11) anschließt und dass bei einer Störung eines Schweißroboters (5) dieser aus dem Arbeitsbereich in den Wartungsbereich (11) gefahren wird, um gewartet zu werden, während der andere Schweißroboter (5) die Schweißaufgaben des ausgefallenen Schweißroboters (5) mit übernimmt.

2. Vorrichtung zur Durchführung des Verfahrens nach Anspruch 1 mit einer Fertigungslinie mit zumindest einer ersten Bearbeitungsstation (1) mit Schweißroboter (4) mit Widerstandspunktschweißzangen und einer zweite Bearbeitungsstation (2) mit mindestens zwei Schweißroboter (5) mit Schutzgasschweißbrennern und mit einer Transporteinrichtung (7) zum Transportieren der einzelnen Karosserieteile oder der Fahrzeugkarosserie (8) durch die einzelnen Bearbeitungsstationen (1 bis 3)
**dadurch gekennzeichnet, dass** die Schweißroboter (5) der zweiten Bearbeitungsstation (2) parallel verfahrbar zur Transporteinrichtung (7) vorgesehen sind und neben ihrem Arbeitsbereich einen Wartungsbereich (11) aufweisen, der am Ende ihres Verfahrweges und außerhalb ihres Arbeitsbereiches vorgesehen ist.

3. Vorrichtung nach Anspruch 2,
**dadurch gekennzeichnet dass** in der zweiten Bearbeitungsstation (2) auf jeder Seite neben der Transporteinrichtung (7) die gleiche Anzahl von Schweißrobotern (5) angeordnet ist.

4. Vorrichtung nach einem der Ansprüche 2 bis 3,
**dadurch gekennzeichnet, dass** der Wartungsbereich (11) jedes Schweißroboters (5) unabhängig vom Wartungsbereich und Arbeitsbereich des anderen Schweißroboters (5) der gleichen Bearbeitungsseite zugänglich ist.

5. Vorrichtung nach einem der Ansprüche 2 bis 4,
**dadurch gekennzeichnet, dass** die zweite Bearbeitungsstation (2) aus zwei Ebenen besteht, wobei in der ersten Ebene auf Höhe der Transporteinrichtung (7) die Schweißroboter (5) und darüber auf der nächst höheren Ebenen (12) die Schweißdrahtrollen angeordnet sind.

6. Vorrichtung nach einem der Ansprüche 2 bis 6,
**dadurch gekennzeichnet, dass** neben den Schweißdrahtrollen weitere Versorgungs- und Steuereinheiten für jeden Schweißroboter (5) dieser Bearbeitungsstation (2) angeordnet sind.

## Claims

1. A method of joining body parts (8) for motor vehicles in assembly-line production, using welding robots (4,5) and various welding processes including both resistance welding (4) and shielded-arc welding (5), wherein the body parts (8) for joining or the vehicle body is conveyed in a production line by a conveyor through the individual machining stations (1 to 3),
**characterised in that** at least two welding robots (5) are provided for shielded-arc welding and move parallel to the conveyor (7) and travel a distance greater than the distance necessary for machining, and wherein the working region adjoins a service region (11) and any faulty welding robot(5) is moved out of the working region into the service region (11) for maintenance whereas the other welding robot (5) takes over from the faulty welding robot (5).

2. A device for working the method according to claim 1, comprising an assembly line containing at least one first machining station (1) and welding robots (4) with resistance electrode holders and a second machining station (2) comprising at least two welding robots (5) with welding guns, also comprising a conveyor (7) for conveying the individual body parts or the vehicle body (8) through the individual machining stations (1 to 3),
**characterised in that** the welding robots (5) in the second machining station (2) are adapted to travel parallel to the conveyor (7) and in addition to their working region have a service region (11) disposed at the end of their travel distance and outside their working area.

3. A device according to claim 2,
**characterised in that** in the second machining station (2) the same number of welding robots (5) are disposed along each side of the conveyor (7).

4. A device according to claim 2 or claim 3,
**characterised in that** the service region (11) of each welding robot (5) is accessible independently of the service region and the working region of the other welding robot (5) on the same machining side.

5. A device according to any of claims 2 to 4,
**characterised in that** the second machining station (2) comprises two levels, wherein the welding robots (5) are disposed at the first level at the same height as the conveyor (7) and the welding wire rollers are disposed above at the next higher level (12).

6. A device according to any of claims 2 to 6,
**characterised in that** in addition to the welding wire rollers, other supply and control units for each welding robot (5) are disposed in the said machining station (12).

## Revendications

1. Procédé pour assembler des pièces de carrosserie (8) de véhicules automobiles sur une chaîne de fabrication en utilisant des robots de soudage (4, 5) et des procédés de soudage différents,
- en utilisant à la fois le soudage par résistance (4) et le soudage sous gaz protecteur (5), selon lequel
- les pièces de carrosserie (8) à relier ou la carrosserie du véhicule sont transportées par une installation de transport selon la ligne d'assemblage à travers les différents postes de travail (1-3),
**caractérisé en ce que**
- on utilise au moins deux robots de soudage (5) pour le soudage sous gaz protecteur, ces robots se déplaçant parallèlement à l'installation de transport (7) et leur course de déplacement est supérieure à la course de déplacement nécessaire à l'opération, et
- selon lequel une zone d'entretien (11) fait suite à la zone de travail, et
- en cas d'incident d'un robot de soudage (5), celui-ci est déplacé de la zone de travail dans la zone d'entretien (11) pour être réparé pendant qu'un autre robot de soudage (5) assure le travail de soudage du robot de soudage (5) défaillant.

2. Dispositif pour la mise en oeuvre du procédé selon la revendication 1,
comprenant une ligne d'assemblage ayant au moins un premier poste de travail (1) équipé de robots de soudage (4) munis de pince de soudage par résistance et d'un second poste de travail (2) ayant au moins deux robots de soudage (5) avec des chalumeaux de soudage sous gaz protecteur et une installation de transport (7) pour transporter les différentes pièces de carrosserie ou la carrosserie (8) du véhicule à travers les différents postes de travail (1-3),
**caractérisé en ce que**
les robots de soudage (5) du second poste de travail (2) sont mobiles paralèllement à une installation de transport (7) et comportent une zone d'entretien (11) à côté de leur zone de travail, cette zone d'entretien étant à l'extrémité de leur course de déplacement et au-delà de leur plage de travail.

3. Dispositif selon la revendication 2,
**caractérisé en ce que**
le même nombre de robots de soudage (5) est prévu dans le second poste de travail (2) de chaque côté, à côté de l'installation de transport (7).

4. Dispositif selon l'une des revendications 2 à 3,
**caractérisé en ce que**
la zone d'entretien (11) de chaque robot de soudage (5) est accessible indépendamment de la zone d'entretien et de la zone de travail de l'autre robot de soudage (5), du même côté de travail.

5. Dispositif selon l'une des revendications 2 à 4,
**caractérisé en ce que**
- le second poste de travail (2) se compose de deux plans,
- les robots de soudage (5) sont prévus dans le premier plan à hauteur de l'installation de transport (7) et les rouleaux de fil de soudage sont prévus au-dessus d'eux dans le plan (12) directement au-dessus.

6. Dispositif selon l'une des revendications 2 à 5,
**caractérisé par**
d'autres unités d'alimentation et de commande de chaque robot de soudage (5) dans ce poste de travail (2) à côté des rouleaux de fil de soudage.
